# EUROPÄISCHE PATENTANMELDUNG

(11) **EP 1 329 345 A1**
(43) Veröffentlichungstag der Anmeldung: **23.07.2003**
(21) Anmeldenummer: 02016065.1
(22) Anmeldetag: 19.07.2002
(51) Int. Cl.: B60H 1/34

(54) **Luftausströmer**

(30) Priorität: 16.01.2002 DE 20200605 U
(71) Anmelder: KENDRION RSL GmbH & Co.KG, 57368 Lennestadt (DE)
(72) Erfinder: Schäfer, Hans Dieter, 61267 Neu Anspach (DE)
(74) Vertreter: Köchling, Conrad, Dipl.-Ing.

(57) **Zusammenfassung**

Um bei einem Luftausströmer für die Innenbelüftung eines Kraftfahrzeuges mit einem Luftkanal, an dessen Luftaustrittsende eine schwenkbare Schließklappe oder -jalousie gehalten ist, vor welcher hintereinander steuerbare Vertikallamellen und steuerbare Horizontallamellen in einem mit dem Luftkanal verbundenen Rahmen gehalten sind, die Steuerung der Zuluft in das Innere des Fahrzeuges zu verbessern, wird vorgeschlagen, dass wenigstens diejenigen Lamellen (24,31,32,33,34,35), die in Strömungsrichtung der Zuluft dieser als letzte eine Vorzugsrichtung aufprägen, über ihre Längsausdehnung mit zahlreichen Ausströmöffnungen (36,37,38) versehen sind.

## Beschreibung

Die Erfindung betrifft einen Luftausströmer für die Innenbelüftung eines Kraftfahrzeugs mit einem Luftkanal, an dessen Luftaustrittsende eine schwenkbare Schließklappe oder -jalousie gehalten ist, vor welcher hintereinander steuerbare Vertikallamellen und steuerbare Horizontallamellen in einem Rahmen gehalten sind, der an dem freien Ende eines den Luftkanal umschließenden Gehäuses befestigt ist.

Die Einstellung der Lamellen in horizontaler oder vertikaler Richtung wird durch je ein Wählrad ermöglicht, dessen Peripherie teilweise durch einen Rahmenschlitz von außen für die Betätigung zugänglich ist. Ein erstes Wählrad ist drehbar am Rahmen gehalten und mit mit den Vertikallamellen gekoppelten Stellgliedern verbunden. Ein zweites Wählrad ist ebenfalls drehbar am Rahmen gehalten und mit mit den Horizontallamellen gekoppelten Stellgliedern verbunden. Dadurch wird es möglich, die bei ganz oder teilweise geöffneter Schließklappe aus dem Luftkanal in das Fahrzeuginnere ausströmende Zuluft in eine Richtung nach links oder rechts und/oder oben oder unten zu lenken.

Oft besteht jedoch nicht der Wunsch, der in das Fahrzeuginnere strömenden Zuluft eine bestimmte Richtung zu erteilen. Man möchte zwar Zuluft in das Fahrzeuginnere blasen lassen, jedoch in einer Strömung, die keine besondere Vorzugsrichtung besitzt und daher vom angeströmten Insassen auch nicht als unangenehm empfunden wird.

Der Erfindung liegt daher die Aufgabe zugrunde, die Steuerung der Zuluft in das Inneren des Fahrzeugs zu verbessern.

Dazu ist bei dem eingangs genannten Luftausströmer nach der Erfindung vorgesehen, dass wenigstens diejenigen Lamellen, die in Strömungsrichtung der Zuluft dieser als letzte eine Vorzugsrichtung aufprägen, über ihre Längsausdehnung mit zahlreichen Ausströmöffnungen versehen sind. Auf diese Fahrzeuginnere, wobei dieser Anteil um so größer ist, je größer der der Restzuluft von den Lamellen aufgeprägte Ablenkwinkel ist. Der Anteil ist am größten, wenn sich die Lamellen in ihrer Stellung mit der größten Neigung befinden, wobei dann praktisch die gesamte Zuluft diffus in das Fahrzeuginnere in einer Menge geblasen wird, die durch die Stellung der Schließklappe gesteuert ist. Die diffuse Zuströmung der Zuluft verhindert, dass einzelne Körperpartien des Insassen stark angeströmt und die Nachbarpartien praktisch überhaupt nicht von der Zuluft erfaßt werden. Bei dem erfindungsgemäßen Luftausströmer können die Insassen daher zusätzlich mit einem diffusen Zuluftstrom "berieselt" werden.

In bevorzugter Ausgestaltung der Erfindung sind die mit den Ausströmöffnungen versehenen Lamellen die Horizontallamellen, die dem Luftstrom eine nach oben oder unten gerichtete Richtung aufprägen. Ferner erweist es sich als zweckmäßig, die Ausströmöffnungen auf jeder Lamelle gleich zu verteilen

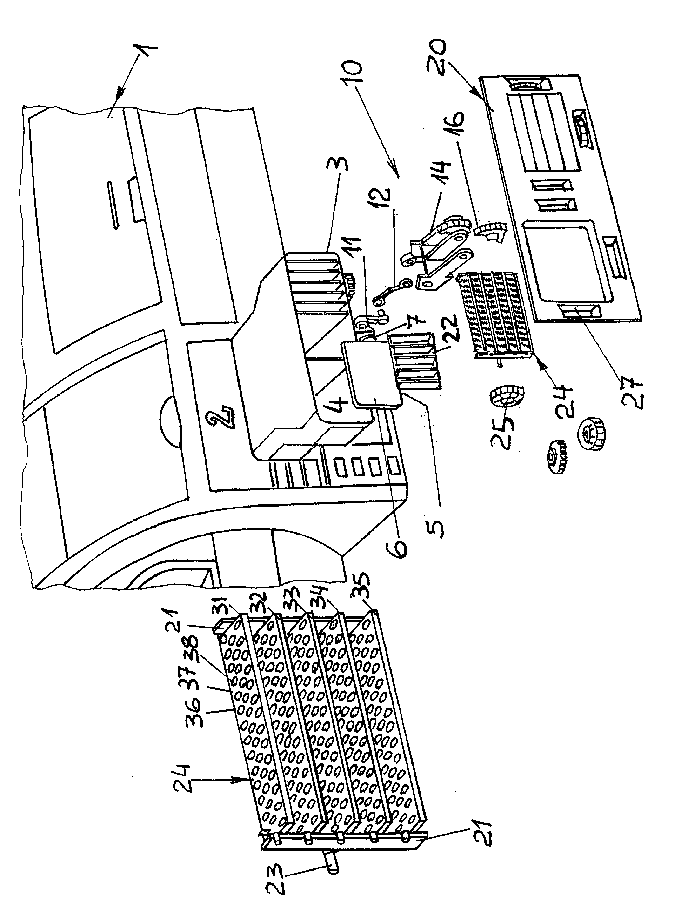

Die Erfindung wird nachstehend anhand des in der beigefügten Zeichnung dargestellten Ausführungsbeispiels im Einzelnen erläutert. Die Figur zeigt in auseinandergezogener perspektivischer Darstellung einen mit den Merkmalen der Erfindung ausgerüsteten Luftausströmer an einem nur teilweise dargestellten Armaturenbrett eines Personenkraftwagens.

Das Armaturenbrett 1 weist etwa in der Mitte seiner Querausdehnung eine Öffnung 2 auf, hinter der von außen nicht erkennbar ein Gebläse angeordnet ist. Ein Gehäuse 3 ist in seinem Umriß der Gestalt der Öffnung 2 angepaßt und kann von außen in die Öffnung 2 eingesetzt werden. Das Gehäuse 3 umschließt unter anderem einen hier linken Luftkanal 4 von etwa rechtwinkligem Querschnitt. Am Luftaustrittsende des Luftkanals 4 ist eine Schließklappe 5 angeordnet, aus der an den beiden gegenüberliegenden Schmalseiten je ein Wellenstummel 6, 7 vorsteht. Die Schließklappe 5 ist in nicht dargestellter Weise in gegenüberliegenden Seitenwänden des Luftkanals 4 um die fluchtenden Wellenstummeln 6, 7 drehbar gelagert. Auf dem etwas länger gehaltenen Wellenstummel 7 ist außerhalb des Luftkanals ein Verstellmechanismus 10 befestigt, welcher nacheinander einen mit dem Wellenstummel 7 einteiligen Hebel 11, ein an den Hebel 11 angelenktes Schubstück 12, einen mit dem Schubstück 12 drehbar verbundenen Wählradträger 14 sowie ein mit dem Wählradträger 14 verbundenes Wählrad 16 umfaßt.

In einem auf die Luftaustrittsöffnung des Gehäuses 3 aufgeklemmten Rahmen 20 sind in Nachbarschaft zur Schließklappe 5 gemeinsam verschwenkbare Vertikallamellen 22 gelagert und in den Rahmen 20 eingesetzt. In Luftströmungsrichtung hinter den Vertikallamellen 22 sind Horizontallamellen 24 gemeinschaftlich schwenkbar angeordnet und ebenfalls in den Rahmen 20 eingesetzt. Damit sind die Horizontallamellen 24 diejenigen, welche in Strömungsrichtung der Zuluft in das Fahrzeuginnere dieser als letzte eine Vorzugsrichtung, also nach oben oder unten, aufprägen. Aus einem Hilfsrahmen 21, in welchem die Horizotallamellen 24 gelagert sind, steht seitlich ein mit nicht dargestellten Stellgliedern verbundener Zapfen 23 vor, auf welchen ein Wählrad 25 aufgeklemmt ist. Die Peripherie des Wählrades 25 steht teilweise durch einen Rahmenschlitz 27 nach außen vor, so daß es leicht mit einem Finger bedient, also gedreht werden kann.

Wie die Ausschnittsvergrößerung linker Hand in der Figur zeigt, ist jedes der hier fünf Lamellenblätter 31, 32, 33, 34, 35 der Horizotallamellen 24 mit zahlreichen Ausströmöffnungen versehen, die sämtlich Durchgangsöffnungen für die Zuluft sind und gleichen Öffnungsdurchmesser haben. Drei der Ausströmöffnungen des Lamellenblattes 31 sind mit 36, 37, 38 bezeichnet. Ferner ist zu erkennen, daß alle Lamellenblätter 31 ... 35 bezüglich der Anordnung und Größe der Ausströmöffnungen gleich gestaltet sind. Unabhängig von der Einstellung der Schließklappe 5 und unabhängig von der Einstellung der Vertikallamellen 22 erzeugen die Horizontallamellen 24 einen durch die Ausströmöffnungen 36, 37, 38 in das Fahrzeuginnere eintretenden diffusen Zuluftstrom, der ein Teil des gesamten von der Schließklappe 5 freigegebenen Zuluftstromes ist. Dieser Teil ist praktisch Null, wenn die Horizontallamellen 24 genau mit der Richtung des die Schließklappe 5 verlassenden Zuluftstromes fluchten. Dieser Teil ist ersichtlich am größten, wenn die Horizontallamellen 24 ihre oberste oder unterste Endlage eingenommen haben. Natürlich hängt dieser Teil auch von der Anzahl und Anordnung der Ausströmöffnungen 36, 37, 38 auf jedem Lamellenblatt ab.

## Patentansprüche

1. Luftausströmer für die Innenbelüftung eines Kraftfahrzeugs mit einem Luftkanal, an dessen Luftaustrittsende eine schwenkbare Schließklappe oder - jalousie gehalten ist, vor welcher hintereinander steuerbare Vertikallamellen und steuerbare Horizontallamellen in einem mit dem Luftkanal verbundenen Rahmen gehalten sind, **dadurch gekennzeichnet, daß** wenigstens diejenigen Lamellen (24; 31, 32, 33, 34, 35), die in Strömungsrichtung der Zuluft dieser als letzte eine Vorzugsrichtung aufprägen, über ihre Längsausdehnung mit zahlreichen Ausströmöffnungen (36, 37, 38) versehen sind.

2. Luftausströmer nach Anspruch 1, **dadurch gekennzeichnet, daß** die Lamellen (24) mehrere gemeinsam verstellbare Lamellenblätter (31, 32, 33, 34, 35) aufweisen, und daß alle Lamellenblätter mit den Ausströmöffnungen versehen sind.

3. Luftausströmer nach Anspruch 2, **dadurch gekennzeichnet, daß** die Ausströmöffnungen auf allen Lamellenblättern über ihre jeweilige Längsausdehnung gleich verteilt angeordnet sind.

4. Luftausströmer nach Anspruch 2 oder 3, **dadurch gekennzeichnet, daß** alle Ausströmöffnungen gleichen Durchmesser haben.

5. Luftausströmer nach einem der vorstehenden Ansprüchen, **dadurch gekennzeichnet, daß** die Lamellen die Horizontallamellen (24) sind.
